# EUROPEAN PATENT APPLICATION

(11) **EP 1 254 600 A1**
(43) Date of publication of application: **06.11.2002**
(21) Application number: 01830288.5
(22) Date of filing: 02.05.2001
(51) Int. Cl.: A23B 7/154, A23B 7/157, A23B 7/148

(54) **Process for preserving fresh fruit**

(71) Applicant: Fruttidea S.r.l., 95032 Belpasso (Catania) (IT)
(72) Inventor: Campana, Sergio, 95127 Catania (IT); Tomasich, Andrea, 95030 S. Agata Li Battiati CT (IT)
(74) Representative: Leone, Mario

(57) **Abstract**

A treatment and packaging process for preserving fresh fruit exclusively based on the use of natural substances comprises the steps of carrying out a first washing of the fruit with a disinfectant aqueous solution, peeling the fruit, slicing the fruit, carrying out a second washing of the fruit with an antioxidant aqueous solution and packaging said fruit so as to maintain unaltered all of the organoleptical and nutritive properties thereof over a lenghty period of time.

## Description

The present invention relates to a treatment and packaging process for preserving fresh fruit.

Wholly untreated fresh fruit, upon peeling, is immediately attacked by an oxidation process shortly leading to the degradation thereof and of all of the organoleptical and nutritive properties thereof.

To date, the art is unaware of methods for preserving fresh fruit apt to ensure the quality thereof over lengthy periods of time.

Actually, to preserve the fruit sugary syrups or chemical preservatives slowing down the oxidation process thereof are used. In fact, an untreated preserved product would have an approximate life of two days.

The art is also aware of methods for treating the fruit with antioxidation solutions of natural type, however such methods are usually used for the fruit destined to the preparation of different products, like sweets, preserves, fruit juices, etc..

The object of the present invention is to provide a treatment and packaging process for preserving fresh fruit characterised in that it comprises the following steps:
- carrying out a first washing of said fruit with a disinfectant aqueous solution;
- peeling said fruit;
- slicing said peeled fruit;
- carrying out a second washing of said sliced fruit with an antioxidant aqueous solution; and
- packaging said fruit.

The main advantage of the process according to the present invention ensues from the fact that for the carrying out thereof exclusively natural substances are used, with no need to add chemical preservatives to the preserved fruit.

A second advantage ensues from the fact that the fruit packaged according to the process provided in the present invention maintains unaltered all of its organoleptical and nutritive properties over a lengthy period of time, also apt to allow a correct distribution thereof at the points of sale.

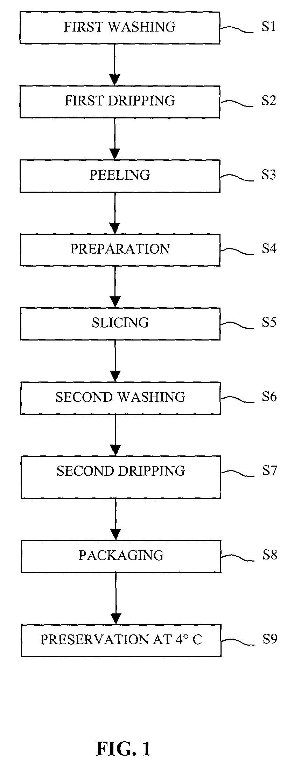

Further advantages, features and operation modes of the present invention will be made apparent in the following detailed description of preferred embodiments thereof, given by way of example and not for limitative purposes, making reference to the figures of the attached drawings, wherein figure 1 is a flow chart indicating the main steps of the process according to the present invention.

Initially, a first washing S1 of the fresh fruit is carried out. At this step, the whole and unpeeled fruit is washed with a disinfectant aqueous solution, e.g., a 16% Sodium hypochlorite-based one at a concentration ranging from 3% to 10%.

Such washing step is protracted over a predetermined period of time, up to a maximum time of about 30 minutes, depending on the typology of the fruit, the variety and the ripeness grade thereof.

Of course, alternatively to the Sodium hypochlorite, other Chlorine-based substances, always having a disinfectant activity, may be used. Following the first washing S1, a first dripping S2 of the washed fruit is carried out, so as to get rid of most of the solution used for the washing.

Then, to peel the fruit a step S3 is carried out. This operation may be carried out manually or with automatic machines specifically provided for each type of fruit.

In particular, during the peeling step the fruit is subjected to a treatment step S4, so as to get rid of some waste thereof. For instance, for the citrus fruits it is important that beside the peel also the albedo be removed.

Moreover, in all those fruits wherein the core portion is not edible, the latter should necessarily be discarded.

After this treatment step, the slicing S5 of the fruit is carried out.

Also the fruit slicing operation may be carried out manually, as well as with specific automatic machinery.

The slicing may be longitudinal or transversal with respect to the fruit axis, and it may provide segments or pieces, e.g., depending on the specific fruit variety.

In any case, the sliced fruit is subjected to a second washing S6. Preferably, such second washing is carried out with an antioxidant aqueous solution inhibiting the oxidation reactions responsible for the organoleptical alteration of the fruit, which are mainly triggered by the contact with air of the peeled fruit.

Hence, such second washing S6 favours the shelf-life and the improved preservation of the fruit treated as abovedisclosed.

To carry out such second washing S6, advantageously a solution of one or more substances in different concentrations may be used.

E.g., a solution of glucose and/or dimers thereof in a rate ranging from 0.5 to 8% may be used, of a Chlorine salt, e.g., Sodium chloride or Potassium chloride, in a concentration ranging from 0.1 to 5%, and of a natural substance, e.g., selected among:
- E vitamin;
- lactic acid;
- malic acid;
- tartaric acid;
- Sodium ascorbate; or
- Calcium ascorbate,
at a concentration ranging from 1 to 10% may be used.

It is understood that, in order to attain the same object and according to the specific application, also other solutions, obtained with different substances yet exhibiting the same type of activity, may advantageously be used.

Alternatively, in order to attain more advantageous results or for specific treatment needs, the second washing S6 may comprise one or more subsequent washing steps, each thereof carried out with a specific solution of one or more of the abovementioned substances.

This second washing is carried out for a predetermined time, up to a maximum of 30 minutes.

The selection of the solution, of the concentration thereof and even of the washing time, is carried out depending on the typology of the fruit, the variety and the ripeness grade thereof.

Subsequently to the washing S6, a second dripping S7 of the fruit to get rid of most of the washing solution is carried out.

After the fruit has been treated as abovedisclosed, the packaging step S8 providing the insertion of the fruit into tight-sealed containers, e.g. of the heat-sealed type wherefrom air be sucked, implementing vacuum containers, is carried out. The sucking of the air from the containers may , e.g., be carried out with a vacuum pump, or alternatively sealing the latter in an environment under vacuum.

Moreover, in the containers a mixture of inert gases, e.g., Nitrogen and/or carbon dioxide under concentrations ranging from 30 to 70%, may be inletted. Also the inletting process of such gas mixture may, e.g., be carried out sealing the containers under a protective atmosphere, e.g., in an environment saturated with said mixture.

The use of such mixtures inside of the containers further improves the preservation of the fruit, prolonging up to 20-30 days the shelf-life thereof, with no degradation whatsoever of the organoleptical and nutritive properties thereof.

This proves particularly advantageous even to the ends of the distribution of the fresh fruit thus treated, which hence may be carried out with no risks of perishing thereof.

Obviously, in order to ensure a proper preservation of the fruit thus treated and packaged, the continuity of the cold chain should mandatorily be ensured in all the steps subsequent to the packaging, so that at no time a predetermined maximum temperature, e.g., one of about 4°C be exceeded.

The present invention has hereto been described according to a preferred embodiment thereof given by way of example and not for limitative purposes.

It is understood that other embodiments thereof may be envisaged, all however falling within the protective scope thereof, as defined by the appended claims.

## Claims

1. A treatment and packaging process for preserving fresh fruit **characterised in that** it comprises the following steps:
• carrying out a first washing (S1) of said fruit with a disinfectant aqueous solution;
• peeling (S3) said fruit;
• slicing (S5) said peeled fruit;
• carrying out a second washing (S6) of said sliced fruit with an antioxidant aqueous solution; and
• packaging (S8) said fruit.

2. The process according to claim 1, wherein said first washing (S1) is carried out on whole and unpeeled fruit.

3. The process according to claim 1 or 2, wherein said disinfectant aqueous solution is a solution of a Chlorine-based substance.

4. The process according to claim 3, wherein said disinfectant aqueous solution is a 16% Sodium hypochlorite solution at a concentration of from 3 to 10%.

5. The process according to any one of the preceding claims, further comprising a step (S2) of carrying out a first dripping of said washed fruit after said step of carrying out a first washing (S1).

6. The process according to any one of the preceding claims, further comprising a step (S4) of discarding the waste of said fruit after said step (S3) of peeling said fruit.

7. The process according to any one of the preceding claims, wherein said step (S3) of peeling said fruit is carried out with automatic machines.

8. The process according to any one of the preceding claims, wherein said antioxidant aqueous solution is a sclution of one or more of the folowing substances:
- glucose and/or dimers thereof, at a concentration of from 0.5 to 8%;
- Chlorine-based salt at a concentration of from 0.1 to 5%; and
- a natural substance at a concentration of from 1 to 10%.

9. The process according to claim 8, wherein said Chlorine-based salt is one of:
- Sodium chloride; and
- Potassium chloride.

10. The process according to claim 8, wherein said natural substance is one among the following:
- E vitamin;
- lactic acid;
- malic acid;
- tartaric acid;
- sodium ascorbate; and
- Calcium ascorbate.

11. The process according to any one of the preceding claims, wherein said second washing (S6) comprises one or more subsequent washing steps.

12. The process according to any one of the preceding claims, further comprising a step (S7) of carrying out a second dripping of the fruit after said step of carrying out a second washing (S6).

13. The process according to any one of the preceding claims, wherein said step (S7) of packaging said fruit comprises a step of inserting said fruit in tight-sealed containers.

14. The process according to claim 13, wherein said step (S7) of packaging said fruit comprises a step of sucking air from said tight-sealed container.

15. The process according to claim 14, wherein the step of sucking ait is carried out with the sealing of said container in an environment under vacuum.

16. The process according to claim 13, wherein said step (S7) of packaging said fruit comprises a step of inletting a mixture of inert gases in said tight-sealed container.

17. The process according to claim 16, wherein the step of inletting a mixture of inert gases is carried out with the sealing of said container in an environment saturated with said mixture.

18. The process according to claim 16 or 17, wherein said mixture of inert gases comprises Nitrogen and/or carbon dioxide in a concentration ranging from 30% to 70%.

19. The process according to any one of the preceding claims, further comprising a step (S8) of preserving said fruit packaged at a temperature lower than a preset maximum temperature.

20. The process according to claim 19, wherein said maximum temperature is of 4 °C.
